# EUROPÄISCHE PATENTANMELDUNG

(11) **EP 1 087 163 A2**
(43) Veröffentlichungstag der Anmeldung: **28.03.2001**
(21) Anmeldenummer: 00113849.4
(22) Anmeldetag: 30.06.2000
(51) Int. Cl.: F16L 11/12, B32B 1/08, B32B 25/14

(54) **Verbundschlauch**

(30) Priorität: 22.09.1999 DE 29916673 U
(71) Anmelder: Poppe GmbH & Co. KG, D-35392 Giessen (DE)
(72) Erfinder: Trautmann, Heinz L., 64689 Grasellenbach-Wahlen (DE)
(74) Vertreter: Missling, Arne, Dipl.-Ing.

(57) **Zusammenfassung**

Die Erfindung betrifft einen Verbundschlauch, insbesondere einen Verbundschlauch für flüssige Lebensmittel, z.B. zur Verwendung in Melkanlagen, wobei der Verbundschlauch aus zwei koaxialen, miteinander verbundenen Schläuchen gebildet ist und der äußere Schlauch aus Gummi besteht.

Ein solcher Verbundschlauch soll so verbessert werden, dass dieser zumindest die gleichen oder bessere Eigenschaften aufweist als die aus dem Stand der Technik bekannten Schläuche, jedoch in der Herstellung kostengünstiger ist und sich leichter reinigen lässt.

Dieses wird dadurch erreicht, dass der innere Schlauch aus einem thermoplastischen Elastomer besteht.

## Beschreibung

Die Erfindung betrifft einen Verbundschlauch, insbesondere einen Verbundschlauch für flüssige Lebensmittel, beispielsweise zur Verwendung in Melkanlagen, wobei der Verbundschlauch aus zwei koaxialen, miteinander verbundenen Schläuchen gebildet ist und der äußere Schlauch aus Gummi besteht.

Ein derartiger Schlauch ist beispielsweise aus der DE-GM 91 07 044.9 bekannt. Der dort offenbarte Verbundschlauch besteht aus einer Kombination von zwei koaxialen aneinander angeordneten Schläuchen, wobei der innere Schlauch den physiologischen Anforderungen für den Transport des Transportgutes angepasst ist und der äußere Schlauch alle anderen von einem Schlauch geforderten Gebrauchseigenschaften wie Haltbarkeit, Flexibilität verwirklicht. Sowohl der innere als auch der äußere Schlauch sind bei diesem Schlauch aus Gummi gefertigt.

Diese, aus dem Stand der Technik bekannten Verbundschläuche haben sich in der Vergangenheit als zuverlässig und insbesondere geeignet für den Transport von flüssigen Lebensmitteln gezeigt. Die Herstellung der Schläuche ist jedoch aufwendig und verhältnismäßig teuer.

An die Erfindung ist daher die Aufgabe gestellt, einen Verbundschlauch vorzuschlagen, der die zumindest gleichen oder bessere Eigenschaften aufweist, wie aus dem Stand der Technik bekannte Schläuche, der jedoch kostengünstiger und leichter herzustellen und zu reinigen ist.

Diese Aufgabe wird erfindungsgemäß dadurch gelöst, dass der innere Schlauch aus einem thermoplastischen Elastomer besteht. Dieser Schlauch weist die gleichen oder bessere physiologische Eigenschaften als der aus dem Stand der Technik bekannte Schlauch auf, kann jedoch einfacher und kostengünstiger hergestellt und gereinigt werden.

Insbesondere der innere Schlauch hat vorteilhafte Eigenschaften. So ist er ungiftig, was besonders wichtig für die Verwendung als Leitung für Lebensmittel wichtig ist. Selbstverständlich muß bei der Verwendung mit Lebensmitteln der innere Schlauch aus einem der gesetzlich zugelassenen Werkstoffe bestehen. Der innere Schlauch ist im Übrigen vorteilhaft im Vergleich zum äußeren Schlauch äußerst dünn. Gleichfalls kann der Verbundschlauch zur Sterilisation längere Zeiten heißem oder kochendem Wasser oder auch Wasserdampf ausgesetzt werden. Auch gehen von dem thermoplastischen Elastomer, welches den inneren Schlauch bildet, fast keine wahrnehmbaren Geruchs- oder Geschmacksprägungen auf das Lebensmittel über. Besonders geeignet ist es für Milchprodukte, aber auch Bier, Wein oder Essig.

Erfindungsgemäß kann der Verbundschlauch aus vorzugsweise koextrudierten Schläuchen bestehen, die an ihren aneinanderliegenden Oberflächen durch chemische Verbindung miteinander fest verbunden werden.

Der äußere Schlauch kann aus Naturkautschuk, Isoprenkautschuk, Styrol-Butadien-Kautschuk, Nitrilkautschuk oder einem Verschnitt aus drei oder mehreren der genannten Kautschuke ausgeführt sein, wobei die Härte zwischen 40 bis 80 Shore A, vorzugsweise aber 50 bis 60 Shore A liegt. Bei 100 Teilen Gesamtkautschuk können dabei zusätzlich 10 bis 50 Teile Ruß in dem äußeren Schlauch enthalten sein. Ferner kann der Schlauch aus Mischungen hergestellt werden, die nicht den Lebensmittelrechtlichen Anforderungen genügen müssen.

Bezogen auf 100 Teile Kautschuk können in dem äußeren Schlauch zusätzlich 10 bis 60 Teile, vorzugsweise 20 bis 40 Teile mineralische zum Teil quartzhaltige Füllstoffe, vorzugsweise des Typs Kaolin, enthalten sein. Dann können auch Oxide von 20 bis 10 Teilen je Oxidkomponente in dem äußeren Schlauch enthalten sein.

Ein erfindungsgemäßer Verbundschlauch kann in dem äußeren Schlauch als weiteren Zusatzstoff ein Alterungs- oder Ozonschutzmittel, Verarbeitungshilfsmittel, Vulkanisationsaktivatoren und Verzögerer in einer Gesamtmenge von 15 Teilen auf 100 Teile des gesamten eingesetzten Kautschuks enthalten.

Gemäß der Erfindung können - auf 100 Teile Gesamtkautschuk des äußeren Schlauches bezogen -, 0,3 bis 1,5 Teile Tetramethylthiurammonosulfid, 0,3 bis 1,5 Teile Tetramethylthiuramdisulfid, 0,1 bis 0,5 Teile o-Tolylbiguanid und 0,5 bis 2,0 Teile Schwefel zugesetzt werden.

Anhand der Zeichnung ist ein Ausführungsbeispiel näher beschrieben. Darin zeigt,
- Fig. 1: einen Querschnitt durch einen erfindungsgemäßen Verbundschlauch 1
und
- Fig. 2: einen Längsschnitt durch den Verbundschlauch gemäß Fig. 1.

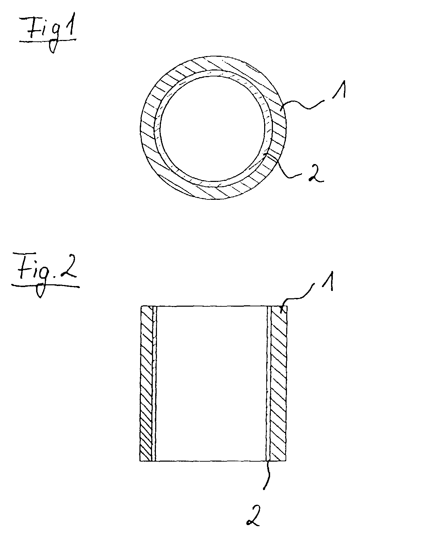

Der erfindungsgemäße Verbundschlauch 1 hat einen äußeren Schlauch 1 aus einem Gummi und einen inneren Schlauch 2 aus einem thermoplastischen Elastomer.

Der äußere Schlauch hat dabei einen Außendurchmesser von 10 bis 20 mm, während die Wandstärke des inneren Schlauches ein Zehntel, also 1 bis 2 mm beträgt. Der innere Schlauch besteht aus einem für Lebensmittel zugelassenen Material, während der äußere Schlauch aus einem kostengünstigen Material besteht. Der Verbundschlauch ist daher einerseits für Lebensmittel geeignet, andererseits kostengünstig herzustellen.

## Patentansprüche

1. Verbundschlauch, insbesondere Verbundschlauch für flüssige Lebensmittel, beispielsweise zur Verwendung in Melkanlagen, wobei der Verbundschlauch aus zwei koaxialen, miteinander verbundenen Schläuchen gebildet ist und der äußere Schlauch aus Gummi besteht,
dadurch gekennzeichnet, dass
der innere Schlauch aus einem thermoplastischen Elastomer besteht.

2. Verbundschlauch nach Anspruch 1, dadurch gekennzeichnet, dass der innere Schlauch im Vergleich zum äußeren Schlauch sehr dünnwandig ist.

3. Verbundschlauch nach Anspruch 1 oder 2, dadurch gekennzeichnet, dass der innere Schlauch aus einem für Lebensmittel gesetzlich zugelassenen Werkstoff besteht.

4. Verbundschlauch nach einem der Ansprüche 1 bis 3, dadurch gekennzeichnet, dass die vorzugsweise koextrudierten Schläuche an ihren aneinanderliegenden Oberflächen durch chemische Verbindung miteinander fest verbunden sind.

5. Verbundschlauch nach einem der Ansprüche 1 oder 4, dadurch gekennzeichnet, dass der äußere Schlauch aus Naturkautschuk, Isoprenkautschuk, Styrol-Butadien-Katschuk, Nitrilkautschuk, Ethyten-Prophylen-Kautschuk oder einem Verschnitt aus zwei oder mehreren der genannten Kautschuke ausgeführt ist und seine Härte 40 bis 80 Shore A, vorzugsweise aber 50 bis 60 Shore A, beträgt.

6. Verbundschlauch nach Anspruch 5, dadurch gekennzeichnet, dass, bezogen auf 100 Teile Gesamtkautschuk, zusätzlich 10 bis 50 Teile Ruße enthalten sind.

7. Verbundschlauch nach Anspruch 5 oder 6, dadurch gekennzeichnet, dass, bezogen auf 100 Teile Kautschuk, mineralische Füllstoffe, vorzugsweise des Typs Kaolin, zum Teil quarzhaltig, zusätzlich 10 bis 60 Teile, vorzugsweise 20 bis 40 Teile, sowie Oxide von Zink und Calcium von 2 bis 10 Teilen je Oxidkomponente enthalten sind.

8. Verbundschlauch nach Anspruch 5 bis 7, dadurch gekennzeichnet, dass als weitere Zusatzstoffe Alterungs- und Ozonschutzmittel, Verarbeitungshilfsmittel, Vulkanisationsaktivatoren und Verzögerer in einer Gesamtmenge bis zu 15 Teilen auf 100 Teile des gesamten eingesetzten Kautschuks verwendet werden.

9. Verbundschlauch nach Anspruch 5 bis 7, dadurch gekennzeichnet, dass, auf 100 Teile Gesamtkautschuk bezogen, 0,3 bis 1,5 Teile Tetramethylthiurammonosulfid, 0,3 bis 1,5 Teile Tetramethylthiuramdisulfid, 0,1 bis 0,5 Teile o-Tolylbiguanid und 0,5 bis 2,0 Teile Schwefel zugesetzt werden.
